# EUROPEAN PATENT APPLICATION

(11) **EP 4 722 627 A1**
(43) Date of publication of application: **08.04.2026**
(21) Application number: 25195348.5
(22) Date of filing: 12.08.2025
(51) Int. Cl.: F28F 1/02, H01M 10/613, H01M 10/625, H01M 10/6557, B21D 22/02, B21D 39/03, B21D 41/04, B21D 53/06, B23P 15/26

(54) **HEAT EXCHANGE PLATE AND METHOD FOR MANUFACTURING HEAT EXCHANGE PLATE**

(30) Priority: 07.10.2024 JP 2024175908; 20.05.2025 JP 2025084135
(71) Applicant: AISIN CORPORATION, Aichi 448-8650 (JP)
(72) Inventor: NAMEKAWA, Go, Kariya, Aichi 448-8650 (JP); UCHIDA, Masayuki, Kariya, Aichi 448-8650 (JP); KAWAI, Yutaro, Kariya, Aichi 448-8650 (JP); UEDA, Yuta, Kariya, Aichi 448-8650 (JP); BATTULA, Lokesh Yadav, Kariya, Aichi 448-8650 (JP); WATANABE, Yuki, Kariya, Aichi 448-8650 (JP); SATAKE, Ryota, Kariya, Aichi 448-8650 (JP)
(74) Representative: TBK

(57) **Abstract**

A heat exchange plate (30) having a plurality of flow paths through which a heat medium flows and having an elongated rectangular plate shape includes: an upper wall (31) and a lower wall (32) that cover the plurality of flow paths from both sides of the heat exchange plate in a plate thickness direction; and a plurality of partition walls (35 to 37) that connect the upper wall and the lower wall in the plate thickness direction and that partition the plurality of flow paths. A direction in which the heat medium flows through the plurality of flow paths is a longitudinal direction of the heat exchange plate. At least one end portion of the heat exchange plate in the longitudinal direction is a closing portion that closes the plurality of flow paths. The upper wall, the lower wall, and the plurality of partition walls that constitute the closing portion are compressed in the plate thickness direction. The heat exchange plate further includes: a brazing portion (39) that fills a gap present between the upper wall, the lower wall, and the plurality of partition walls that constitute the closing portion.

## Description

### TECHNICAL FIELD

This disclosure relates to a heat exchange plate and a method for manufacturing a heat exchange plate.

### BACKGROUND DISCUSSION

JP 2021-169112A (Reference 1) describes a liquid-cooled heat exchanger. The heat exchanger includes a heat exchange plate through which a coolant flows, an inlet joint through which the coolant flows into the heat exchange plate, and an outlet joint through which the coolant flows out of the heat exchange plate. The heat exchanger has a rectangular parallelepiped shape. The heat exchanger includes an upper wall and a lower wall disposed at an interval from each other, and a plurality of flow path side walls connecting the upper wall and the lower wall. In the heat exchanger, a plurality of flow paths through which the coolant flows are partitioned by the upper wall, the lower wall, and the plurality of flow path side walls. The inlet joint and the outlet joint are connected to the upper wall.

The heat exchange plate is manufactured by performing a removal step, a pressing step, and a welding step on an extruded material extruded such that the heat exchange plate includes the upper wall, the lower wall, and the plurality of flow path side walls. The removal step is a step of removing the plurality of flow path side walls at both end portions of the extruded material in a longitudinal direction. The pressing step is a step of crushing a portion of the extruded material, from which the plurality of flow path side walls are removed, to bring the upper wall and the lower wall, which constitute the portion, into close contact with each other. The welding step is a step of laser-welding a pressed portion of the extruded material. Through such steps, the plurality of flow paths are blocked at both end portions of the extruded material in the longitudinal direction.

Both end portions of the flow paths of the heat exchange plate as described above are closed by performing laser welding in the welding step. Therefore, in order to ensure a quality of welding, it is important to accurately remove the plurality of flow path side walls in the removal step, and to accurately bring the upper wall and the lower wall into close contact with each other in the pressing step. In this respect, a manufacturing process of the heat exchange plate is likely to be complicated.

### SUMMARY

According to an aspect of this disclosure, a heat exchange plate having a plurality of flow paths through which a heat medium flows and having an elongated rectangular plate shape includes: an upper wall and a lower wall that cover the plurality of flow paths from both sides of the heat exchange plate in a plate thickness direction; and a plurality of partition walls that connect the upper wall and the lower wall in the plate thickness direction and that partition the plurality of flow paths. A direction in which the heat medium flows through the plurality of flow paths is a longitudinal direction of the heat exchange plate. At least one end portion of the heat exchange plate in the longitudinal direction is a closing portion that closes the plurality of flow paths. The upper wall, the lower wall, and the plurality of partition walls that constitute the closing portion are compressed in the plate thickness direction. The heat exchange plate further includes: a brazing portion that fills a gap present between the upper wall, the lower wall, and the plurality of partition walls that constitute the closing portion.

According to another aspect of this disclosure, a method for manufacturing the heat exchange plate includes: an extrusion step of molding an extruded material having the upper wall, the lower wall, and the plurality of partition walls by extrusion processing; a pressing step of compressing, in the plate thickness direction, at least one end portion of the extruded material in an extrusion direction to mold a compressed portion at the at least one end portion; and a penetration step of causing a brazing material to penetrate from an end surface of an end portion provided with the compressed portion, among both end surfaces of the extruded material in the extrusion direction, into a gap present between the upper wall, the lower wall, and the plurality of partition walls that constitute the compressed portion to make the compressed portion into the closing portion.

The heat exchange plate and the method for manufacturing the same can prevent a manufacturing process from becoming complicated.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a heat exchange system according to a first embodiment;
Fig. 2 is an exploded perspective view of a heat exchanger of the heat exchange system according to the first embodiment;
Fig. 3 is a partial side view of a heat exchange plate of the heat exchanger according to the first embodiment;
Fig. 4 is a cross-sectional view taken along a line 4-4 in Fig. 3;
Fig. 5 is a cross-sectional view taken along a line 5-5 in Fig. 3;
Fig. 6 is a process chart illustrating a method for manufacturing the heat exchange plate according to the first embodiment;
Fig. 7 is a cross-sectional view of a first end portion of an extruded material after a cutting step in the first embodiment;
Fig. 8 is a cross-sectional view of the first end portion of the extruded material after a second pressing step in the first embodiment;
Fig. 9 is a cross-sectional view of the first end portion of the extruded material after a penetration step in the first embodiment;
Fig. 10 is an exploded perspective view of a connection pipe and an adapter of the heat exchanger according to the first embodiment;
Fig. 11 is an exploded perspective view of the connection pipe and the adapter of the heat exchanger according to the first embodiment;
Fig. 12 is a cross-sectional view of the heat exchanger according to the first embodiment;
Fig. 13 is a partial side view of the heat exchanger according to the first embodiment;
Fig. 14 is a partial side view of the heat exchanger according to the first embodiment;
Fig. 15 is a partial side view of a heat exchanger according to a second embodiment;
Fig. 16 is a cross-sectional view taken along a line 16-16 in Fig. 15;
Fig. 17 is a partial cross-sectional view of a heat exchange plate according to a first modification;
Fig. 18 is a partial cross-sectional view of a heat exchange plate according to a second modification; and
Fig. 19 is a partial cross-sectional view of the heat exchange plate according to the second modification.

### DETAILED DESCRIPTION

### First Embodiment

Hereinafter, a first embodiment of a heat exchanger will be described.

### Configuration of First Embodiment

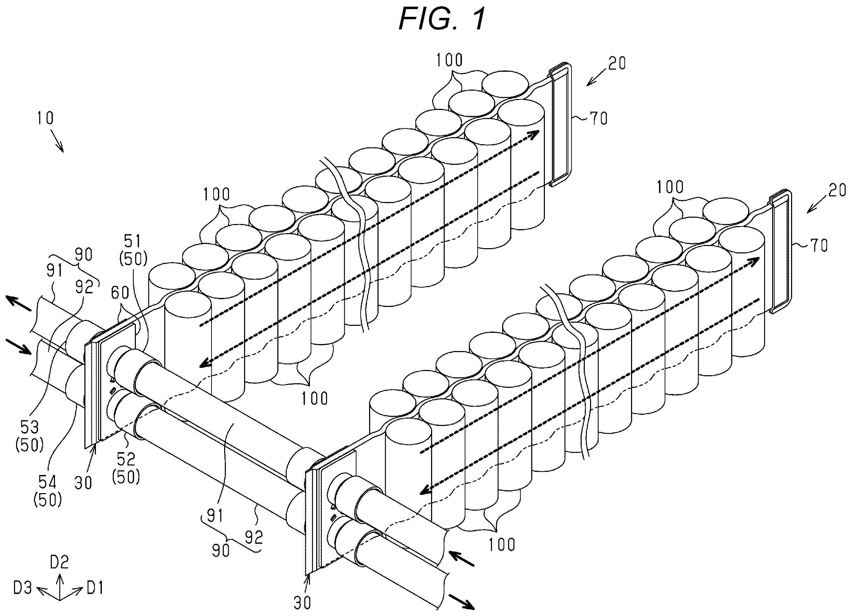

As illustrated in Fig. 1, a heat exchange system 10 is a device for adjusting a temperature of a heat exchange target 100 to an appropriate temperature by cooling or heating the heat exchange target 100. In the first embodiment, the heat exchange target 100 is a plurality of batteries mounted on an electric vehicle. Specifically, the battery is a cylindrical cell.

As illustrated in Fig. 1, the heat exchange system 10 includes a plurality of heat exchangers 20 and a plurality of pipes 90. Although not illustrated, the heat exchange system 10 includes a pump that circulates a heat medium, and a temperature adjustment unit that adjusts a temperature of the heat medium. The heat medium is a liquid such as oil or water used for cooling and heating the heat exchange target 100. In another embodiment, the heat medium may be a gas such as air.

### Heat Exchanger 20

As illustrated in Fig. 1, the heat exchanger 20 has an elongated configuration. In the following description, a longitudinal direction of the heat exchanger 20 is defined as a first direction D1, a direction orthogonal to the first direction D1 is defined as a second direction D2, and a direction orthogonal to both the first direction D1 and the second direction D2 is defined as a third direction D3. In the first embodiment, the third direction D3 is a direction in which the plurality of heat exchangers 20 in the heat exchange system 10 are arranged.

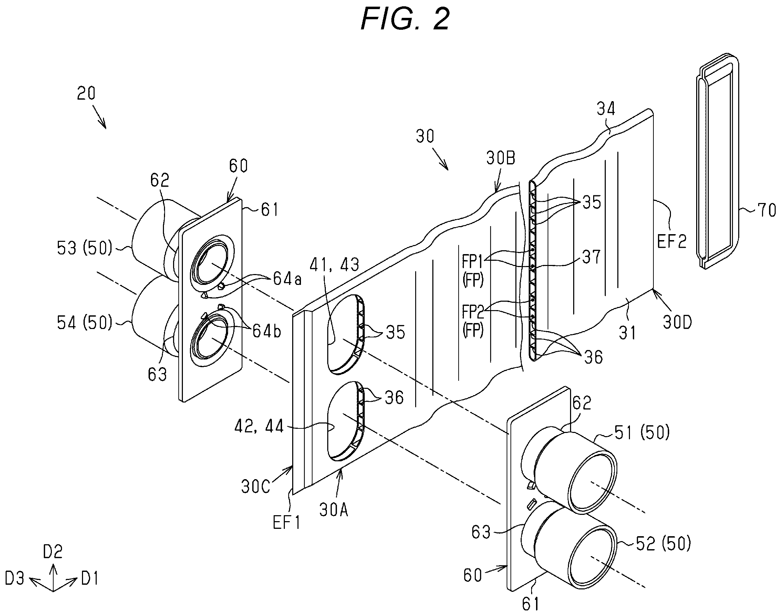

As illustrated in Figs. 1 and 2, the heat exchanger 20 includes a heat exchange plate 30, a plurality of connection pipes 50, two adapters 60, and a cap 70. In the first embodiment, the components of the heat exchanger 20 are made of a metal material having high thermal conductivity, such as aluminum.

### Heat Exchange Plate 30

As illustrated in Figs. 1 and 2, the heat exchange plate 30 constitutes a major part of the heat exchanger 20. The heat exchange plate 30 has an elongated rectangular plate shape. A plate thickness direction of the heat exchange plate 30 is the third direction D3. When the heat exchange plate 30 is viewed from the plate thickness direction, a longitudinal direction of the heat exchange plate 30 is the first direction D1, and a short direction (hereinafter, also referred to as a "width direction") of the heat exchange plate 30 is the second direction D2. A cross-sectional shape orthogonal to the longitudinal direction of the heat exchange plate 30 is substantially constant with respect to the longitudinal direction.

As illustrated in Figs. 2 to 4, the heat exchange plate 30 has a plurality of flow paths FP. The heat exchange plate 30 includes an upper wall 31, a lower wall 32, two side walls 33 and 34, a plurality of partition walls 35 to 37, and brazing portions 39. Further, in the heat exchange plate 30, a connection portion 30A, a heat exchange portion 30B, a closing portion 30C, and a reversing portion 30D are constituted by the upper wall 31, the lower wall 32, the two side walls 33 and 34, and the plurality of partition walls 35 to 37. In the following description, one end portion of the heat exchange plate 30 in the longitudinal direction is referred to as a first end portion, the other end portion of the heat exchange plate 30 in the longitudinal direction is referred to as a second end portion, a tip end surface of the first end portion is referred to as a first end surface EF1, and a tip end surface of the second end portion is referred to as a second end surface EF2. The first end portion is an end portion opposite to the second end portion, and the first end surface EF1 is an end surface opposite to the second end surface EF2. The first end portion and the second end portion of the heat exchange plate 30 are portions having a constant length in the longitudinal direction.

### Flow Path FP

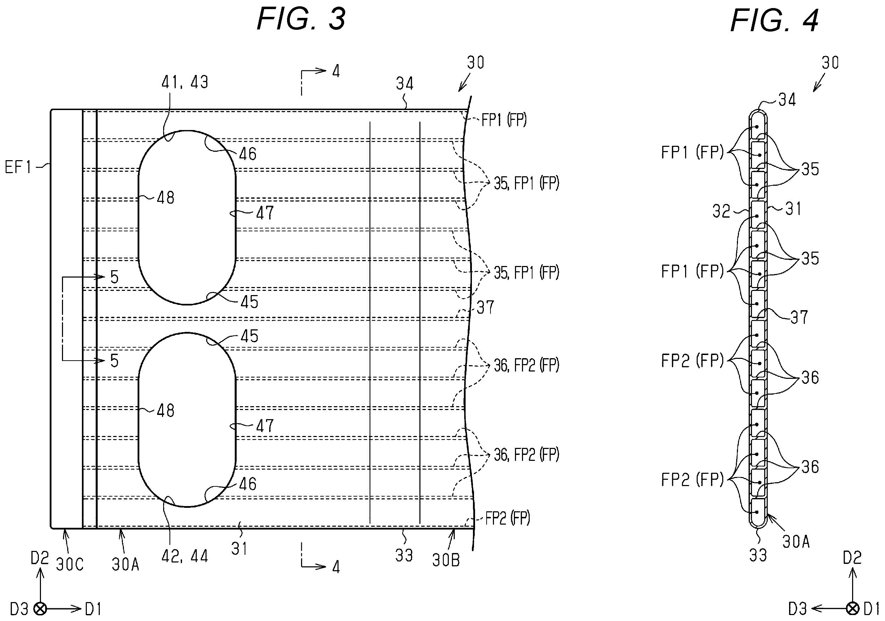

As illustrated in Figs. 3 and 4, the plurality of flow paths FP include a plurality of first flow paths FP1 constituting upstream portions of the plurality of flow paths FP and a plurality of second flow paths FP2 constituting downstream portions of the plurality of flow paths FP. The plurality of first flow paths FP1 and the plurality of second flow paths FP2 are arranged in the width direction of the heat exchange plate 30. Specifically, the plurality of first flow paths FP1 are arranged in a state of being closer to one side in the width direction of the heat exchange plate 30, and the plurality of second flow paths FP2 are arranged in a state of being closer to the other side in the width direction of the heat exchange plate 30. In this respect, the first flow paths FP1 and the second flow paths FP2 are not alternately arranged in the width direction of the heat exchange plate 30.

The direction in which the heat medium flows through the plurality of first flow paths FP1 is a direction opposite to the direction in which the heat medium flows through the plurality of second flow paths FP2. Further, upstream ends of the plurality of first flow paths FP1 and downstream ends of the plurality of second flow paths FP2 are located at the first end portion of the heat exchange plate 30. On the other hand, downstream ends of the plurality of first flow paths FP1 and upstream ends of the plurality of second flow paths FP2 are located at the second end portion of the heat exchange plate 30.

In the first embodiment, a total number of the first flow paths FP1 is equal to a total number of the second flow paths FP2, but in another embodiment, the total number of the first flow paths FP1 may be different from the total number of the second flow paths FP2. A cross-sectional shape of the flow path FP may be rectangular or circular. Further, in the plurality of flow paths FP, the cross-sectional shape of the flow path FP may not be constant.

### Upper Wall 31, Lower Wall 32, Side Walls 33 and 34, and Partition Walls 35 to 37

As illustrated in Figs. 3 and 4, the upper wall 31 and the lower wall 32 have a rectangular plate shape. A plate thickness direction of the upper wall 31 and the lower wall 32 is the third direction D3. The upper wall 31 and the lower wall 32 face each other in the third direction D3 with a certain interval therebetween. Thus, the upper wall 31 and the lower wall 32 cover the plurality of flow paths FP from both sides in the plate thickness direction.

The two side walls 33 and 34 have a semi-cylindrical shape. The two side walls 33 and 34 extend in the first direction D1. The two side walls 33 and 34 face each other in the second direction D2 with a certain interval therebetween. The side wall 33 connects one end portions of the upper wall 31 and the lower wall 32 in the width direction, and the side wall 34 connects the other end portions of the upper wall 31 and the lower wall 32 in the width direction. Thus, the two side walls 33 and 34 cover the plurality of flow paths FP from both sides in the width direction. In this respect, it can be said that the plurality of first flow paths FP1 are arranged from one side wall 34 toward the other side wall 33. It can be said that the plurality of second flow paths FP2 are arranged from the other side wall 33 toward the one side wall 34.

The plurality of partition walls 35 to 37 have a rectangular plate shape. A plate thickness direction of the plurality of partition walls 35 to 37 is the second direction D2. The plurality of partition walls 35 to 37 connect the upper wall 31 and the lower wall 32 in the third direction D3. Thus, the plurality of partition walls 35 to 37, the upper wall 31, the lower wall 32, and the two side walls 33 and 34 partition the plurality of flow paths FP. The plurality of partition walls 35 to 37 include the plurality of first partition walls 35 that partition the plurality of first flow paths FP1, the plurality of second partition walls 36 that partition the plurality of second flow paths FP2, and the central partition wall 37 that partitions the first flow path FP1 and the second flow path FP2 adjacent to each other in the width direction of the heat exchange plate 30. In the width direction of the heat exchange plate 30, the central partition wall 37 is located at a center of the plurality of first partition walls 35 and the plurality of second partition walls 36.

### Connection Portion 30A

As illustrated in Fig. 3, the connection portion 30A is a portion of the heat exchange plate 30 that supplies the heat medium to the first flow paths FP1 and discharges the heat medium from the second flow paths FP2. The connection portion 30A has a first through hole 41 and a second through hole 42 penetrating the connection portion 30A in the plate thickness direction. The first through hole 41 and the second through hole 42 are arranged at an interval from each other in the width direction of the heat exchange plate 30. The first through hole 41 and the second through hole 42 have an oval shape when viewed from the plate thickness direction of the heat exchange plate 30.

The first through hole 41 and the second through hole 42 penetrate the upper wall 31, the lower wall 32, and the plurality of partition walls 35 and 36. Specifically, the first through hole 41 removes a part of the plurality of first partition walls 35, so that all the first flow paths FP1 are connected to the first through hole 41. On the other hand, the second through hole 42 removes a part of the plurality of second partition walls 36, so that all the second flow paths FP2 are connected to the second through hole 42. However, the first through hole 41 and the second through hole 42 are provided to avoid the central partition wall 37. Therefore, in the connection portion 30A, the first flow path FP1 and the second flow path FP2 adjacent to each other in the width direction of the heat exchange plate 30 are not connected to each other.

In the following description, an opening formed by the first through hole 41 penetrating the upper wall 31 and the lower wall 32 is referred to as a "first opening 43", and an opening formed by the second through hole 42 penetrating the upper wall 31 and the lower wall 32 is referred to as a "second opening 44". The first opening 43 and the second opening 44 open in the plate thickness direction of the heat exchange plate 30. The first opening 43 and the second opening 44 are located at an interval from each other in the width direction of the heat exchange plate 30. The first opening 43 is connected to the upstream ends of the plurality of first flow paths FP1, which are upstream ends of the plurality of flow paths FP. The second opening 44 is connected to the downstream ends of the plurality of second flow paths FP2, which are downstream ends of the plurality of flow paths FP.

The first opening 43 and the second opening 44 include two arc portions 45 and 46 having an arc shape and two linear portions 47 and 48 having a linear shape. One arc portion 45 connects one end portions of the two linear portions 47 and 48, and the other arc portion 46 connects the other end portions of the two linear portions 47 and 48.

### Heat Exchange Portion 30B

As illustrated in Figs. 1 and 2, the heat exchange portion 30B is a portion that heats or cools the heat exchange target 100, in a state of being in contact with the heat exchange target 100. The heat exchange portion 30B is located between the connection portion 30A and the reversing portion 30D in the longitudinal direction of the heat exchange plate 30. Since the heat exchange target 100 in the first embodiment is a plurality of cylindrical cells, portions of the upper wall 31, the lower wall 32, the two side walls 33 and 34, and the plurality of partition walls 35 to 37 that constitute the heat exchange portion 30B are curved in a bellows shape. In other words, portions of the upper wall 31, the lower wall 32, the two side walls 33 and 34, and the plurality of partition walls 35 to 37 that constitute the heat exchange portion 30B are curved in a corrugated plate shape.

### Closing Portion 30C

As illustrated in Fig. 2, the closing portion 30C constitutes the first end portion of the heat exchange plate 30. The closing portion 30C is a portion that is sealed such that the heat medium does not leak from the first end portion of the heat exchange plate 30.

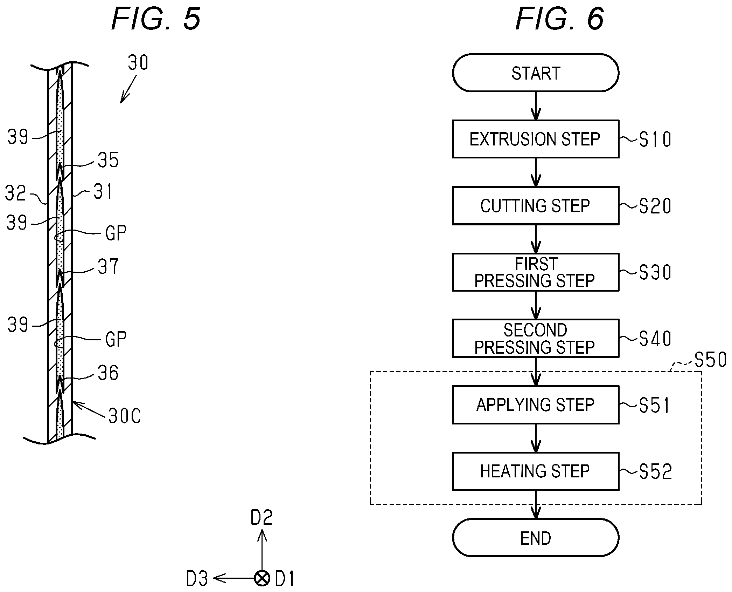

As illustrated in Figs. 2 and 5, the upper wall 31, the lower wall 32, the two side walls 33 and 34, and the plurality of partition walls 35 to 37 that constitute the closing portion 30C are compressed in the plate thickness direction of the heat exchange plate 30. Therefore, the upper wall 31 and the lower wall 32 constituting the closing portion 30C are in close contact with each other in the plate thickness direction of the heat exchange plate 30. On the other hand, the two side walls 33 and 34 and the plurality of partition walls 35 to 37 are bent between the upper wall 31 and the lower wall 32. As illustrated in Fig. 5, it is preferable that both end portions of the plurality of partition walls 35 to 37 connected to the upper wall 31 and the lower wall 32 are bent so as to be shifted with respect to a central portion. Further, it is preferable that directions, in which the plurality of partition walls 35 to 37 bend, are the same direction. However, a bending state of the plurality of partition walls 35 to 37 can take various states depending on conditions when the closing portion 30C is generated by a second pressing step S40 described later.

A plurality of gaps GP are present between the upper wall 31, the lower wall 32, the two side walls 33 and 34, and the plurality of partition walls 35 to 37 constituting the closing portion 30C. The plurality of gaps GP are the plurality of flow paths FP whose shapes are changed by compression. The plurality of gaps GP are filled with the brazing portions 39 made of a brazing material BR. In this respect, portions of the upper wall 31, the lower wall 32, the two side walls 33 and 34, and the plurality of partition walls 35 to 37, which constitute the closing portion 30C, facing the plurality of gaps GP are joined to each other by the brazing portions 39. For example, the brazing material BR is an aluminum brazing material containing aluminum. A melting point of the brazing material BR is lower than a melting point of a material of the upper wall 31, the lower wall 32, the two side walls 33 and 34, and the plurality of partition walls 35 to 37 that constitute the major part of the heat exchange plate 30. The plurality of gaps GP are connected to the plurality of flow paths FP, respectively. It is desirable that the brazing portions 39 fill the plurality of gaps GP and are not present inside the plurality of flow paths FP.

### Reversing Portion 30D

As illustrated in Fig. 2, the reversing portion 30D constitutes the second end portion of the heat exchange plate 30. The reversing portion 30D is a portion for connecting the downstream ends of the plurality of first flow paths FP1 and the upstream ends of the plurality of second flow paths FP2.

### Method for Manufacturing Heat Exchange Plate 30

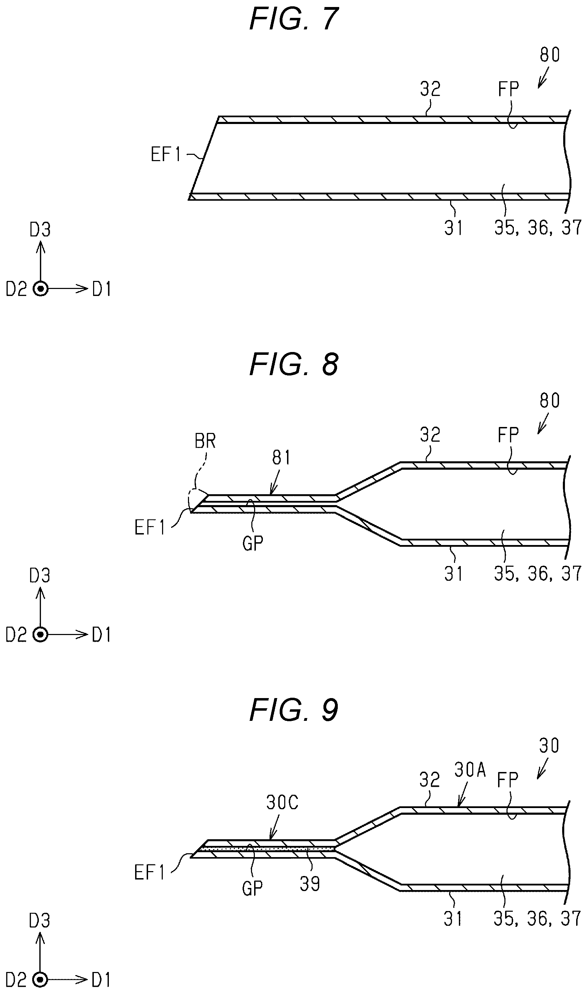

A method for manufacturing the heat exchange plate 30 will be described with reference to Figs. 6 to 9. Figs. 7 to 9 are cross-sectional views illustrating how the state of the portion of the heat exchange plate 30 to be the closing portion 30C changes with progress of steps.

As illustrated in Fig. 6, the method for manufacturing the heat exchange plate 30 includes an extrusion step S10, a cutting step S20, a first pressing step S30, the second pressing step S40, and a penetration step S50. A subject of manufacturing the heat exchange plate 30 may be a person or an industrial machine.

The extrusion step S10 is a step of extruding a metal material to mold an extruded material 80 that is elongated and that has a uniform cross-sectional shape in the longitudinal direction. By performing the extrusion step S10, the upper wall 31, the lower wall 32, the two side walls 33 and 34, and the plurality of partition walls 35 to 37 are formed in the extruded material 80. That is, the plurality of flow paths FP are formed in the extruded material 80.

The cutting step S20 is a step subsequent to the extrusion step S10. The cutting step S20 is a step of cutting the extruded material 80 into a predetermined length. One end portion of the extruded material 80 in the longitudinal direction is the first end portion of the heat exchange plate 30, and the other end portion of the extruded material 80 in the longitudinal direction is the second end portion of the heat exchange plate 30. In this respect, one end portion of the extruded material 80 in the longitudinal direction is referred to as the first end portion, and the other end portion of the extruded material 80 in the longitudinal direction is referred to as the second end portion.

As illustrated in Fig. 7, the first end surface EF1 of the first end portion of the extruded material 80 in the longitudinal direction is cut to be non-perpendicular to an extrusion direction. That is, the first end surface EF1 of the extruded material 80 is inclined with respect to the plate thickness direction of the extruded material 80. Although not illustrated, the second end surface EF2 of the second end portion of the extruded material 80 is cut to be perpendicular to the extrusion direction. Therefore, a length of the upper wall 31 is longer than that of the lower wall 32 in the longitudinal direction of the extruded material 80. That is, an end surface of the upper wall 31 constituting the first end portion of the extruded material 80 is shifted in the longitudinal direction with respect to an end surface of the lower wall 32 constituting the first end portion of the extruded material 80. Therefore, when the first end portion of the extruded material 80 in the longitudinal direction is viewed from the plate thickness direction of the extruded material 80, the lower wall 32 and the plurality of partition walls 35 to 37 are partially exposed.

The first pressing step S30 is a step subsequent to the cutting step S20. The first pressing step S30 is a step of molding the connection portion 30A and the heat exchange portion 30B in the extruded material 80 by pressing the extruded material 80. That is, the first pressing step S30 is a step of forming the first through hole 41 and the second through hole 42 in a portion to be the connection portion 30A of the extruded material 80, and is a step of bending a portion to be the heat exchange portion 30B of the extruded material 80 into a corrugated plate shape.

The second pressing step S40 is a step subsequent to the cutting step S20. As illustrated in Figs. 7 and 8, the second pressing step S40 is a step of pressing the first end portion of the extruded material 80 in the plate thickness direction of the extruded material 80 to generate a compressed portion 81 at the first end portion. Portions of the upper wall 31 and the lower wall 32 constituting the compressed portion 81 approach each other in the plate thickness direction of the extruded material 80 by the second pressing step S40. The two side walls 33 and 34 and the plurality of partition walls 35 to 37 that connect the upper wall 31 and the lower wall 32 are bent in the same direction as illustrated in Fig. 5. Therefore, by performing the second pressing step S40, the plurality of flow paths FP become the plurality of gaps GP. While the shapes of the plurality of flow paths FP are constant, the shapes of the plurality of gaps GP are not necessarily constant. The first end surface EF1 of the extruded material 80 has a gentle inclination with respect to the extrusion direction by performing the pressing step.

The penetration step S50 is a step of causing the brazing material BR to penetrate into the plurality of gaps GP of the compressed portion 81 of the extruded material 80. The penetration step S50 includes an applying step S51 and a heating step S52. The penetration step S50 is a step subsequent to the second pressing step S40.

As indicated by a two-dot chain line in Fig. 8, the applying step S51 is a step of applying the paste-like brazing material BR to the first end surface EF1 of the extruded material 80. The applying step S51 is performed in a state where the upper wall 31 is located vertically above the lower wall 32. At this time, the plate thickness direction of the extruded material 80 is preferably a vertical direction. Therefore, the first end surface EF1 of the extruded material 80 is inclined with respect to the vertical direction. As a result, in the applying step S51, the paste-like brazing material BR is easily applied to the first end surface EF1 of the extruded material 80. The paste-like brazing material BR applied to the first end surface EF1 of the extruded material 80 is less likely to flow vertically downward. In the applying step S51, the paste-like brazing material BR may be slightly pushed into the plurality of gaps GP when being applied to the first end surface EF1 of the extruded material 80.

The heating step S52 is a step subsequent to the applying step S51. The heating step S52 is a step of heating and liquefying the paste-like brazing material BR, which is applied to the extruded material 80. In the heating step S52, the extruded material 80 may be heated in a heating furnace, or the extruded material 80 may be heated by a burner or the like in the atmosphere. In the heating step S52, the paste-like brazing material BR applied to the first end surface EF1 of the extruded material 80 is liquefied. The liquefied brazing material BR penetrates the plurality of gaps GP of the extruded material 80 by a capillary phenomenon. When the heating step S52 is completed, the molten brazing material BR is solidified to form the brazing portion 39. Thus, as illustrated in Figs. 5 and 9, the plurality of gaps GP of the extruded material 80 are filled with the brazing portions 39. In other words, portions of the upper wall 31, the lower wall 32, the two side walls 33 and 34, and the plurality of partition walls 35 to 37, which partition the gaps GP, are joined by the brazing portions 39. By performing the penetration step S50, the compressed portion 81 becomes the closing portion 30C.

As illustrated in Fig. 9, the first end surface EF1 is an end surface of the closing portion 30C. The first end surface EF1 is inclined with respect to the plate thickness direction when viewed from the width direction of the heat exchange plate 30. As a result, the length of the upper wall 31 constituting the closing portion 30C is longer than a length of the lower wall 32 constituting the closing portion 30C. In another embodiment, the length of the upper wall 31 constituting the closing portion 30C may be shorter than the length of the lower wall 32 constituting the closing portion 30C. In the embodiment, since the second pressing step S40 is performed, the inclination of the first end surface EF1 of the heat exchange plate 30 is different from the inclination of the first end surface EF1 of the extruded material 80.

The penetration step S50 is a step subsequent to the second pressing step S40, but the first pressing step S30 may be a step before or a step subsequent to the second pressing step S40 and the penetration step S50. The first pressing step S30 and the second pressing step S40 may be steps performed simultaneously. When the first pressing step S30 and the penetration step S50 are completed, the manufacture of the heat exchange plate 30 is completed.

### Connection Pipe 50

As illustrated in Figs. 2, 10, and 11, the plurality of connection pipes 50 include a supply pipe 51, a discharge pipe 52, a first branch pipe 53, and a second branch pipe 54. The supply pipe 51 has a cylindrical shape. The supply pipe 51 includes a small-diameter portion 50a having a small outer diameter, a large-diameter portion 50b having a large outer diameter, and an intermediate portion 50c connecting the small-diameter portion 50a and the large-diameter portion 50b to each other. An inner diameter and an outer diameter of the intermediate portion 50c gradually increase from the small-diameter portion 50a toward the large-diameter portion 50b in an axial direction of the supply pipe 51. The supply pipe 51 is molded by, for example, drawing a metal pipe. In the first embodiment, the discharge pipe 52, the first branch pipe 53, and the second branch pipe 54 have the same shape as the supply pipe 51. That is, the discharge pipe 52, the first branch pipe 53, and the second branch pipe 54 each include the small-diameter portion 50a, the large-diameter portion 50b, and the intermediate portion 50c.

### Adapter 60

As illustrated in Fig. 2, one adapter 60 connects the supply pipe 51 and the discharge pipe 52 to the heat exchange plate 30, and the other adapter 60 connects the first branch pipe 53 and the second branch pipe 54 to the heat exchange plate 30. In the following description, when the two adapters 60 are distinguished from each other, the one adapter 60 is referred to as a "first adapter 60" and the other adapter 60 is referred to as a "second adapter 60".

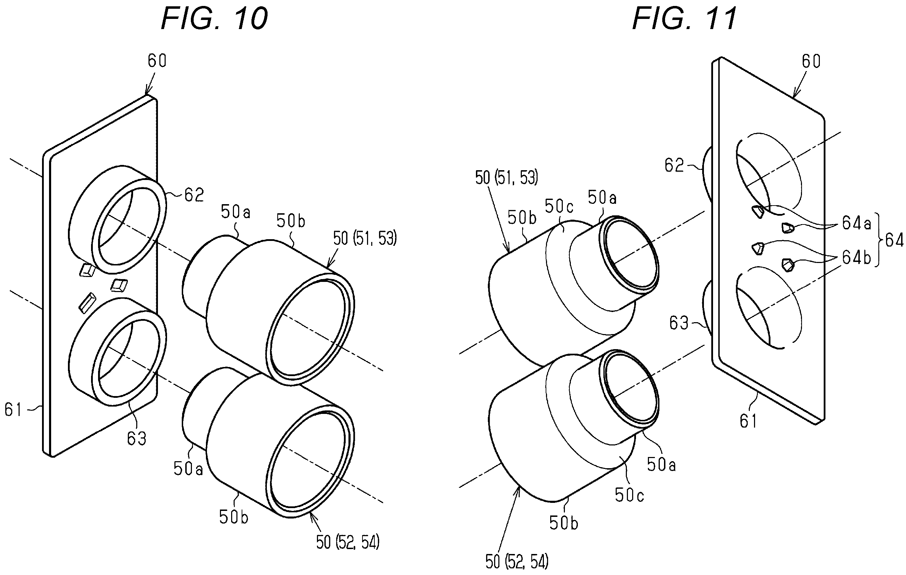

As illustrated in Figs. 10 and 11, the adapter 60 includes a base panel 61, a first tubular portion 62, a second tubular portion 63, and a plurality of locking portions 64.

The base panel 61 has a rectangular plate shape. The first tubular portion 62 and the second tubular portion 63 have a cylindrical shape. The first tubular portion 62 and the second tubular portion 63 are arranged in the longitudinal direction of the base panel 61. An axial direction of the first tubular portion 62 and an axial direction of the second tubular portion 63 coincide with a plate thickness direction of the base panel 61. The adapter 60 is molded by, for example, burring a metal plate. Therefore, a hole opens in a portion of the base panel 61 where the first tubular portion 62 and the second tubular portion 63 are provided. In other words, the base panel 61 includes a portion extending outward in a radial direction of the first tubular portion 62 from a base end of the first tubular portion 62 and a portion extending outward in the radial direction of the second tubular portion 63 from a base end of the second tubular portion 63.

In the first embodiment, a total number of the locking portions 64 is "4". The four locking portions 64 are provided on a surface of the base panel 61 opposite to a surface on which the first tubular portion 62 and the second tubular portion 63 are provided. The four locking portions 64 are protrusions protruding from the base panel 61. A protruding direction of the four locking portions 64 with respect to the base panel 61 is a direction opposite to a protruding direction of the first tubular portion 62 and the second tubular portion 63 with respect to the base panel 61. The four locking portions 64 include two first locking portions 64a and two second locking portions 64b. The two first locking portions 64a and the two second locking portions 64b are located at an interval from each other in the longitudinal direction of the base panel 61. The two first locking portions 64a are located at an interval from each other in the short direction of the base panel 61. Similarly, the two second locking portions 64b are located at an interval from each other in the short direction of the base panel 61.

### Cap 70

As illustrated in Fig. 2, the cap 70 seals the reversing portion 30D of the heat exchange plate 30. The cap 70 may be formed of a single member or two or more members. The second end portion of the heat exchange plate 30 can be inserted into the cap 70.

### Engagement Relationship of Components of Heat Exchanger 20

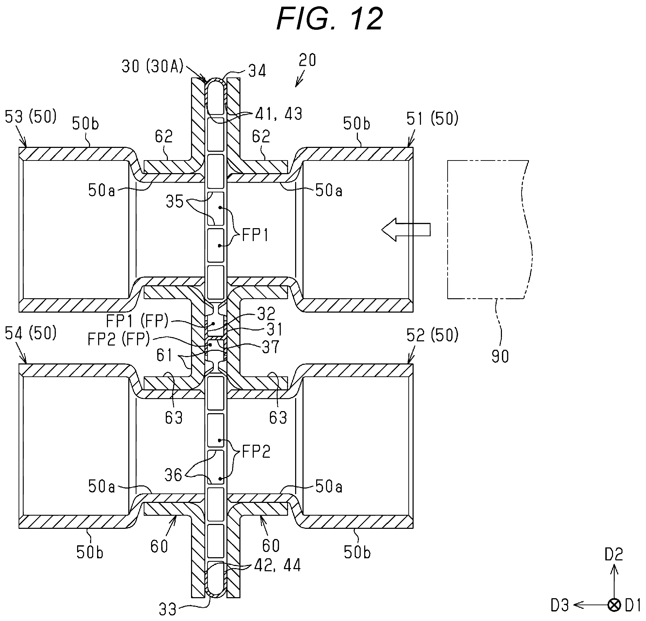

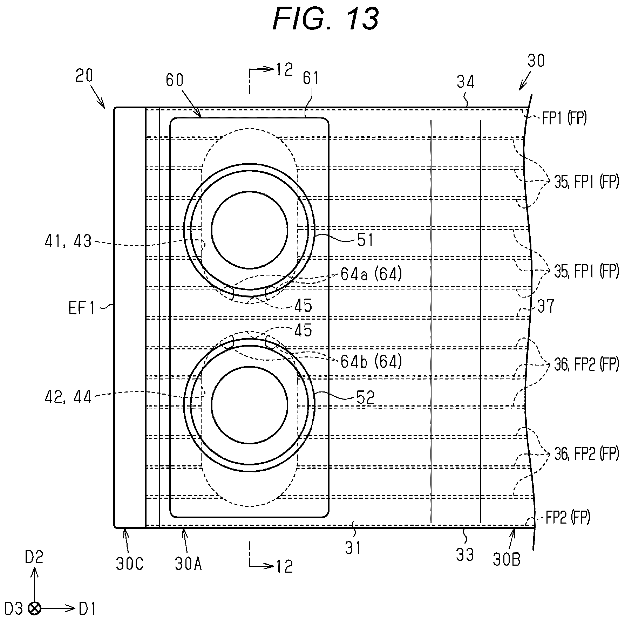

An engagement relationship of components of the heat exchanger 20 will be described with reference to Figs. 2 and 12 to 14. For ease of description, a part of the configuration is not illustrated in Figs. 12 and 13.

As illustrated in Figs. 2 and 12, the supply pipe 51 and the discharge pipe 52 are joined to the first adapter 60, and the first branch pipe 53 and the second branch pipe 54 are joined to the second adapter 60.

Specifically, as illustrated in Fig. 12, the first tubular portion 62 and the small-diameter portion 50a of the supply pipe 51 are joined to each other in a state where the small-diameter portion 50a of the supply pipe 51 is inserted into the first tubular portion 62 of the first adapter 60. The second tubular portion 63 and the small-diameter portion 50a of the discharge pipe 52 are joined to each other in a state where the small-diameter portion 50a of the discharge pipe 52 is inserted into the second tubular portion 63 of the first adapter 60. Thus, the first tubular portion 62 of the first adapter 60 holds the supply pipe 51, and the second tubular portion 63 of the first adapter 60 holds the discharge pipe 52.

Similarly, the first tubular portion 62 and the small-diameter portion 50a of the first branch pipe 53 are joined to each other in a state where the small-diameter portion 50a of the first branch pipe 53 is inserted into the first tubular portion 62 of the second adapter 60. The second tubular portion 63 and the small-diameter portion 50a of the second branch pipe 54 are joined to each other in a state where the small-diameter portion 50a of the second branch pipe 54 is inserted into the second tubular portion 63 of the second adapter 60. Thus, the first tubular portion 62 of the second adapter 60 holds the first branch pipe 53, and the second tubular portion 63 of the second adapter 60 holds the second branch pipe 54.

As illustrated in Figs. 2, 12, and 13, the first adapter 60 is joined to the upper wall 31 constituting the connection portion 30A of the heat exchange plate 30, and the second adapter 60 is joined to the lower wall 32 constituting the connection portion 30A.

Specifically, as illustrated in Fig. 13, the first adapter 60, to which the supply pipe 51 and the discharge pipe 52 are joined, is joined to the upper wall 31 to cover the first opening 43 and the second opening 44 of the upper wall 31. At this time, the first adapter 60 connects the supply pipe 51 to the first through hole 41, and connects the discharge pipe 52 to the second through hole 42. Thus, the supply pipe 51 and the first tubular portion 62 of the first adapter 60 can supply the heat medium to the flow paths FP through the first opening 43 of the heat exchange plate 30. The discharge pipe 52 and the second tubular portion 63 of the first adapter 60 can discharge the heat medium from the flow paths FP through the second opening 44 of the heat exchange plate 30.

The second adapter 60, to which the first branch pipe 53 and the second branch pipe 54 are joined, is joined to the lower wall 32 to cover the first opening 43 and the second opening 44 of the lower wall 32. At this time, the second adapter 60 connects the first branch pipe 53 to the first through hole 41, and connects the second branch pipe 54 to the second through hole 42. In a state where the two adapters 60 are joined to the heat exchange plate 30, an axis of the supply pipe 51 coincides with an axis of the first branch pipe 53, and an axis of the discharge pipe 52 coincides with an axis of the second branch pipe 54.

Since a joining state of the first adapter 60 to the upper wall 31 is the same as a joining state of the second adapter 60 to the lower wall 32, in the following description, only the joining state of the first adapter 60 to the upper wall 31 will be described.

The plurality of locking portions 64 of the first adapter 60 are locked to the first opening 43 of the first through hole 41 and the second opening 44 of the second through hole 42. Specifically, the two first locking portions 64a of the first adapter 60 are locked to the arc portion 45 of the first opening 43 of the upper wall 31. The two second locking portions 64b of the first adapter 60 are locked to the arc portion 45 of the second opening 44 of the upper wall 31. As a result, the first adapter 60 is restricted from moving in a direction orthogonal to the third direction D3 with respect to the heat exchange plate 30. In other words, the first adapter 60 is positioned with respect to the heat exchange plate 30 in a direction orthogonal to the third direction D3.

The base panel 61 of the first adapter 60 is joined to the upper wall 31 of the heat exchange plate 30 in a surface contact state. That is, a contact area between the base panel 61 of the first adapter 60 and the upper wall 31 of the heat exchange plate 30, in other words, a joining area between the base panel 61 of the first adapter 60 and the upper wall 31 of the heat exchange plate 30 is relatively large. Since the first adapter 60 is joined to the heat exchange plate 30, the heat medium is prevented from leaking from between the base panel 61 of the first adapter 60 and the upper wall 31 of the heat exchange plate 30.

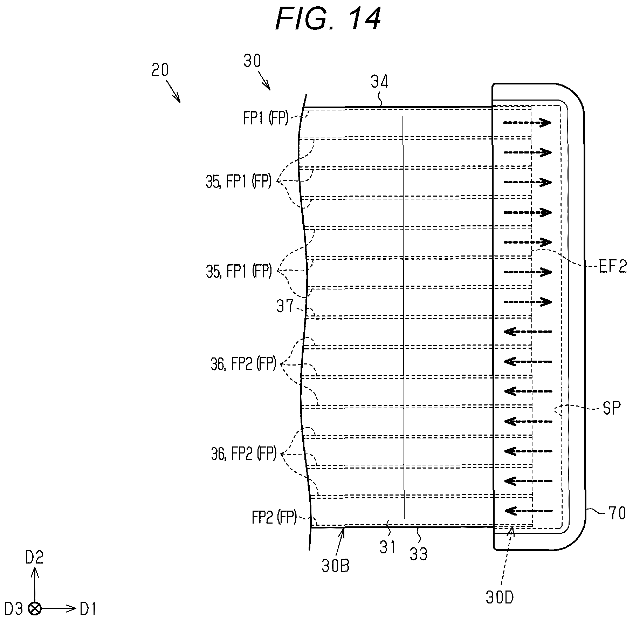

As illustrated in Fig. 14, the reversing portion 30D of the heat exchange plate 30 is joined to the cap 70 in a state of being inserted into the cap 70. The plurality of first flow paths FP1 of the heat exchange plate 30 are connected to the plurality of second flow paths FP2 of the heat exchange plate 30 through an internal space SP of the cap 70. Thus, as indicated by thick arrows in Fig. 14, a flow direction of the heat medium can be reversed at the second end portion of the heat exchange plate 30.

In the first embodiment, the components of the heat exchanger 20 are joined by brazing. In another embodiment, the components of the heat exchanger 20 may be joined by other methods such as welding and bonding as long as leakage of the heat medium between the components of the heat exchanger 20 can be prevented. The components of the heat exchanger 20 may be molded by processing a clad plate in which an aluminum plate is coated with the brazing material. Accordingly, the number of work steps at the time of brazing is reduced.

### Pipe 90

As illustrated in Fig. 1, the plurality of pipes 90 connect the two heat exchangers 20 disposed adjacent to each other. The pipe 90 includes a plurality of first pipes 91 and a plurality of second pipes 92. The number of the first pipes 91 and the number of the second pipes 92 change depending on a total number of the heat exchangers 20 constituting the heat exchange system 10. The first pipe 91 connects the supply pipe 51 of one of the two adjacent heat exchangers 20 and the first branch pipe 53 of the other one of the heat exchangers 20. On the other hand, the second pipe 92 connects the discharge pipe 52 of one of the two adjacent heat exchangers 20 and the second branch pipe 54 of the other one of the heat exchangers 20. The pipe 90 may be a hose having appropriate elasticity or a hard pipe.

### Operations of First Embodiment

As indicated by thick arrows in Fig. 1, when adjusting the temperature of the heat exchange target 100, the heat exchange system 10 circulates the heat medium among the plurality of heat exchangers 20. The first pipe 91 corresponds to an outward path of the heat medium circulating through the heat exchange system 10, and the second pipe 92 corresponds to a return path of the heat medium circulating through the heat exchange system 10. That is, a heat medium amount flowing into the first flow paths FP1 of the heat exchanger 20 is an amount obtained by subtracting a heat medium amount discharged from the first branch pipe 53 of the heat exchanger 20 from a heat medium amount supplied to the supply pipe 51 of the heat exchanger 20. On the other hand, a heat medium amount flowing out from the second flow paths FP2 of the heat exchanger 20 is an amount obtained by subtracting a heat medium amount supplied to the second branch pipe 54 of the heat exchanger 20 from a heat medium amount discharged from the discharge pipe 52 of the heat exchanger 20.

When cooling the heat exchange target 100, the heat exchange system 10 adjusts the temperature of the circulating heat medium to a temperature lower than the temperature of the heat exchange target 100. On the other hand, when heating the heat exchange target 100, the heat exchange system 10 adjusts the temperature of the heat medium circulating through the heat exchange system 10 to a temperature higher than the temperature of the heat exchange target 100.

The heat medium is supplied to the heat exchanger 20 from the first pipe 91 connected to the supply pipe 51. The heat medium circulating through the heat exchanger 20 sequentially flows through the first flow paths FP1, the internal space SP of the cap 70, and the second flow paths FP2. That is, the heat medium flows through the heat exchange portion 30B of the heat exchanger 20. Thus, the heat medium cools or heats the heat exchange target 100. The heat medium that has reached the downstream ends of the second flow paths FP2 is discharged from the second pipe 92 connected to the discharge pipe 52.

### Effects of First Embodiment

(1) The closing portion 30C of the heat exchange plate 30 is compressed in the plate thickness direction of the heat exchange plate 30. Further, in the closing portion 30C of the heat exchange plate 30, the gaps GP between the upper wall 31, the lower wall 32, the two side walls 33 and 34, and the plurality of partition walls 35 to 37 are filled with the brazing portions 39. Thus, the closing portion 30C of the heat exchange plate 30 closes first end portions of the plurality of flow paths FP. That is, at the first end portion of the heat exchange plate 30, the first end portions of the plurality of flow paths FP can be closed without removing the plurality of partition walls 35 to 37 or making the interval between the upper wall 31 and the lower wall 32 constant. In this respect, the heat exchange plate 30 can reduce the time and effort for manufacturing.
(2) As illustrated in Fig. 8, since the end surface of the upper wall 31 is shifted in the longitudinal direction with respect to the end surface of the lower wall 32 at the end portion of the heat exchange plate 30 where the closing portion 30C is located, the paste-like brazing material BR is easily applied to the end portion where the closing portion 30C is located. Therefore, the heat exchange plate 30 can be easily manufactured in the case of adopting the manufacturing process of applying the paste-like brazing material BR to one end portion of the heat exchange plate 30 and then heating the paste-like brazing material BR.
(3) By forming the first end surface EF1 constituting the closing portion 30C of the heat exchange plate 30 as an inclined surface, the length of the upper wall 31 constituting the closing portion 30C can be longer than the length of the lower wall 32. That is, by forming the first end surface EF1 constituting the closing portion 30C of the heat exchange plate 30 as an inclined surface, a configuration in which the end surface of the upper wall 31 is shifted in the longitudinal direction with respect to the end surface of the lower wall 32 at the end portion where the closing portion 30C is located can be implemented by a simple configuration.
(4) In the closing portion 30C of the heat exchange plate 30, directions in which the plurality of partition walls 35 to 37 are bent are the same directions. Therefore, shapes of the gaps GP present between the upper wall 31, the lower wall 32, and the plurality of partition walls 35 to 37, which constitute the closing portion 30C of the heat exchange plate 30, are likely to be uniform. Therefore, unevenness is less likely to occur in brazing when the brazing portion 39 is generated.

### Second Embodiment

Hereinafter, a second embodiment of the heat exchanger 20 will be described. A heat exchanger 20X according to the second embodiment is different from the heat exchanger 20 according to the first embodiment in a flow state of the heat medium in the heat exchanger 20X. Therefore, in the following, portions different from those of the first embodiment will be mainly described, and the same reference numerals are given to the same member configurations as those of the first embodiment, and the description thereof will be omitted.

### Configuration of Second Embodiment

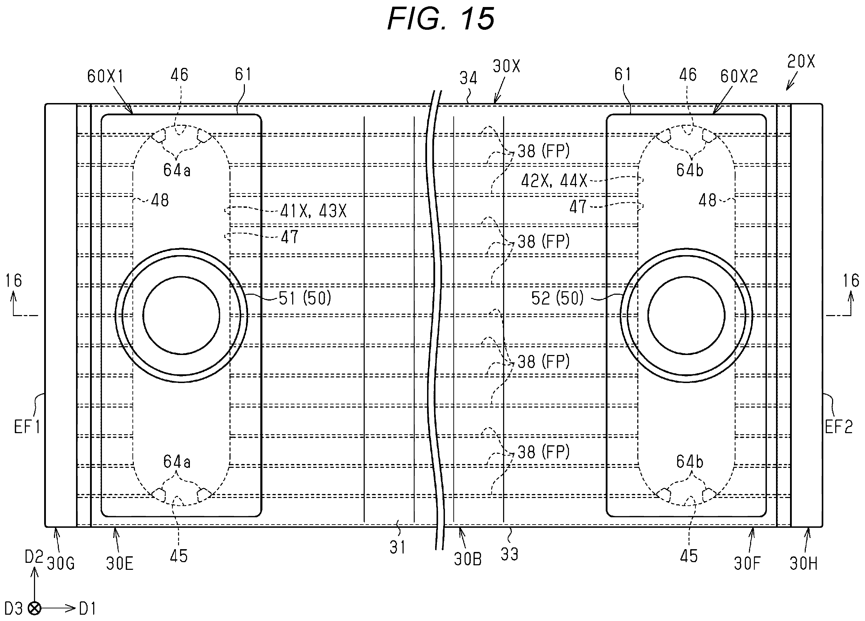

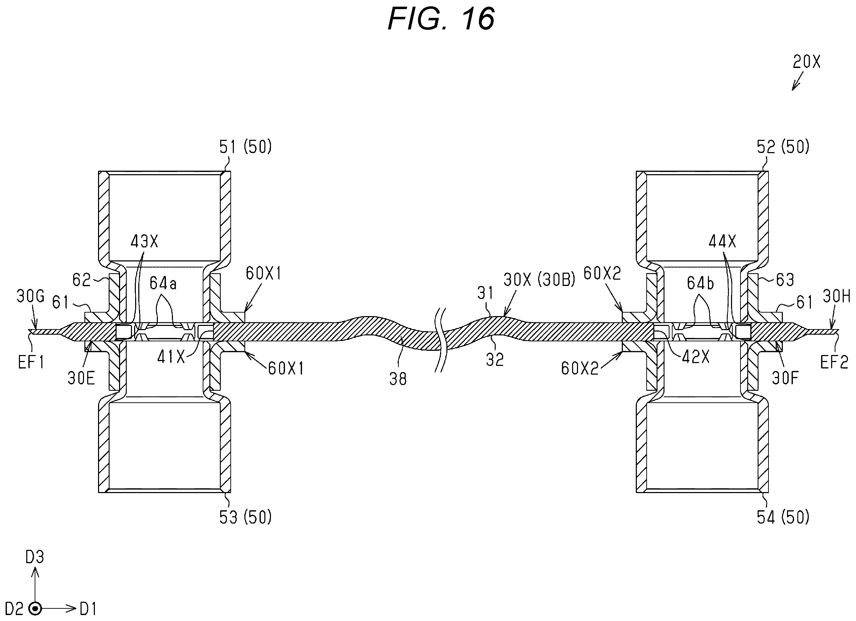

As illustrated in Figs. 15 and 16, the heat exchanger 20X includes a heat exchange plate 30X, the plurality of connection pipes 50, two first adapters 60X1, and two second adapters 60X2. The first adapter 60X1 according to the second embodiment connects the supply pipe 51 to the heat exchange plate 30X, and connects the first branch pipe 53 to the heat exchange plate 30X. Similarly, the second adapter 60X2 according to the second embodiment connects the discharge pipe 52 to the heat exchange plate 30X, and connects the second branch pipe 54 to the heat exchange plate 30X. In this respect, the meaning of "first and second" in "first adapter and second adapter" is slightly different from that in the first embodiment.

The heat exchange plate 30X has the plurality of flow paths FP. The heat exchange plate 30X includes the upper wall 31, the lower wall 32, the two side walls 33 and 34, a plurality of partition walls 38, and the brazing portions 39. Further, in the heat exchange plate 30X, the heat exchange portion 30B, a first connection portion 30E, a second connection portion 30F, a first closing portion 30G, and a second closing portion 30H are constituted by the upper wall 31, the lower wall 32, the two side walls 33 and 34, and the plurality of partition walls 38.

The plurality of flow paths FP are arranged in a width direction of the heat exchange plate 30X. The upstream ends of the plurality of flow paths FP are located at a first end portion of the heat exchange plate 30X, and the downstream ends of the plurality of flow paths FP are located at a second end portion of the heat exchange plate 30X.

The first connection portion 30E and the second connection portion 30F are located on both sides of the heat exchange portion 30B in the longitudinal direction of the heat exchange plate 30X. The first connection portion 30E and the second connection portion 30F are portions corresponding to the connection portion 30A in the first embodiment. The first connection portion 30E has a first through hole 41X. The first through hole 41X penetrates the upper wall 31, the lower wall 32, and the plurality of partition walls 38 in a plate thickness direction of the heat exchange plate 30X. Specifically, the first through hole 41X removes a part of the plurality of partition walls 38, so that all the flow paths FP are connected to the first through hole 41X. Similarly, the second connection portion 30F has a second through hole 42X. The second through hole 42X penetrates the upper wall 31, the lower wall 32, and the plurality of partition walls 38 in the plate thickness direction of the heat exchange plate 30X. Specifically, the second through hole 42X removes a part of the plurality of partition walls 38, so that all the flow paths FP are connected to the second through hole 42X. The first through hole 41X and the second through hole 42X have an oval shape when viewed from the plate thickness direction of the heat exchange plate 30X.

In the following description, an opening formed by the first through hole 41X penetrating the upper wall 31 and the lower wall 32 is referred to as a "first opening 43X", and an opening formed by the second through hole 42X penetrating the upper wall 31 and the lower wall 32 is referred to as a "second opening 44X". The first opening 43X is connected to the upstream ends of the plurality of flow paths FP. The second opening 44X is connected to the downstream ends of the plurality of flow paths FP. The first opening 43X and the second opening 44X include the two arc portions 45 and 46 having an arc shape, and the two linear portions 47 and 48 having a linear shape. A length of the linear portions 47 and 48 in the second embodiment is longer than the length of the linear portions 47 and 48 in the first embodiment.

The first closing portion 30G and the second closing portion 30H correspond to the closing portion 30C in the first embodiment. The first closing portion 30G seals the plurality of flow paths FP at the first end portion of the heat exchange plate 30X. That is, the upper wall 31, the lower wall 32, the two side walls 33 and 34, and the plurality of partition walls 38, which constitute the first closing portion 30G, are compressed in the plate thickness direction of the heat exchange plate 30X. Although not illustrated, the plurality of gaps GP present between the upper wall 31, the lower wall 32, the two side walls 33 and 34, and the plurality of partition walls 38, which constitute the first closing portion 30G, are filled with the brazing portions 39. Similarly, the second closing portion 30H seals the plurality of flow paths FP at the second end portion of the heat exchange plate 30X. That is, the upper wall 31, the lower wall 32, the two side walls 33 and 34, and the plurality of partition walls 38, which constitute the second closing portion 30H, are compressed in the plate thickness direction of the heat exchange plate 30X. Although not illustrated, the plurality of gaps GP present between the upper wall 31, the lower wall 32, the two side walls 33 and 34, and the plurality of partition walls 38, which constitute the second closing portion 30H, are filled with the brazing portions 39.

As illustrated in Figs. 15 and 16, in the second embodiment, both end portions of the heat exchange plate 30X in the longitudinal direction are the first closing portion 30G and the second closing portion 30H. Therefore, a method for manufacturing the heat exchange plate 30X according to the second embodiment includes the second pressing step S40 and the penetration step S50 for generating the first closing portion 30G, and the second pressing step S40 and the penetration step S50 for generating the second closing portion 30H.

The first adapter 60X1 includes the base panel 61, the first tubular portion 62, and a plurality of the first locking portions 64a. The first tubular portion 62 extends from a central portion of the base panel 61. The axial direction of the first tubular portion 62 coincides with the plate thickness direction of the base panel 61. In the second embodiment, a total number of the first locking portions 64a is "4". The four first locking portions 64a are provided on the surface of the base panel 61 opposite to the surface on which the first tubular portion 62 is provided. Two of the four first locking portions 64a are provided at each of both end portions of the base panel 61 in the longitudinal direction. At both end portions of the base panel 61 in the longitudinal direction, the two first locking portions 64a are located at an interval from each other in the short direction of the base panel 61. The base panel 61 has a portion extending in the radial direction from the base end of the first tubular portion 62.

The second adapter 60X2 includes the base panel 61, the second tubular portion 63, and a plurality of the second locking portions 64b. The second tubular portion 63 extends from the central portion of the base panel 61. The axial direction of the second tubular portion 63 coincides with the plate thickness direction of the base panel 61. In the second embodiment, a total number of the second locking portions 64b is "4". The four second locking portions 64b are provided on the surface of the base panel 61 opposite to the surface on which the second tubular portion 63 is provided. Two of the four second locking portions 64b are provided at each of both end portions of the base panel 61 in the longitudinal direction. At both end portions of the base panel 61 in the longitudinal direction, the two second locking portions 64b are located at an interval from each other in the short direction of the base panel 61. The base panel 61 has a portion extending in the radial direction from the base end of the second tubular portion 63.

### Engagement Relationship of Components of Heat Exchanger 20X

On a first end side of the heat exchanger 20X in the longitudinal direction, the first tubular portion 62 and the supply pipe 51 are joined to each other in a state where the supply pipe 51 is inserted into the first tubular portion 62 of the first adapter 60X1. The first adapter 60X1 is joined to the upper wall 31 of the heat exchange plate 30X so as to cover the first opening 43X of the upper wall 31. Thus, the supply pipe 51 and the first tubular portion 62 of the first adapter 60X1 can supply the heat medium to the flow paths FP through the first opening 43X of the heat exchange plate 30X.

The plurality of first locking portions 64a of the first adapter 60X1 are locked to the first opening 43X of the first through hole 41X. Specifically, the two first locking portions 64a of the first adapter 60X1 are locked to the arc portion 45 of the first opening 43X, and the other two first locking portions 64a of the first adapter 60X1 are locked to the arc portion 46 of the first opening 43X. Thus, the first adapter 60X1 is positioned with respect to the heat exchange plate 30X. Further, the base panel 61 of the first adapter 60X1 is joined to the upper wall 31 of the heat exchange plate 30X in a surface contact state.

Although the description is omitted, the same applies to a joining relationship between the first adapter 60X1, to which the first branch pipe 53 is joined, and the lower wall 32 of the heat exchange plate 30X.

On a second end side of the heat exchanger 20X in the longitudinal direction, the second tubular portion 63 and the discharge pipe 52 are joined to each other in a state where the discharge pipe 52 is inserted into the second tubular portion 63 of the second adapter 60X2. The second adapter 60X2 is joined to the upper wall 31 of the heat exchange plate 30X so as to cover the second opening 44X of the upper wall 31. Thus, the discharge pipe 52 and the second tubular portion 63 of the second adapter 60X2 can discharge the heat medium from the flow paths FP through the second opening 44X of the heat exchange plate 30X.

The plurality of second locking portions 64b of the second adapter 60X2 are locked to the second opening 44X of the second through hole 42X. Specifically, the two second locking portions 64b of the second adapter 60X2 are locked to the arc portion 45 of the second opening 44X, and the other two second locking portions 64b of the second adapter 60X2 are locked to the arc portion 46 of the second opening 44X. Thus, the second adapter 60X2 is positioned with respect to the heat exchange plate 30X. Further, the base panel 61 of the second adapter 60X2 is joined to the upper wall 31 of the heat exchange plate 30X in a surface contact state.

Although the description is omitted, the same applies to a joining relationship between the second adapter 60X2, to which the second branch pipe 54 is joined, and the lower wall 32 of the heat exchange plate 30X.

### Operations of Second Embodiment

In the second embodiment, when the temperature of the heat exchange target 100 is adjusted, the heat medium is circulated in the heat exchanger 20X as in the first embodiment. That is, the heat medium is supplied to the heat exchanger 20X from the first pipe 91 connected to the supply pipe 51. The heat medium circulating through the heat exchanger 20X flows through the plurality of flow paths FP of the heat exchange plate 30X from the first end portion toward the second end portion. That is, the heat medium flows through the heat exchange portion 30B of the heat exchanger 20X. Thus, the heat medium cools or heats the heat exchange target 100. The heat medium that has reached the downstream ends of the flow paths FP is discharged from the second pipe 92 connected to the discharge pipe 52.

### Effects of Second Embodiment

The second embodiment can obtain the following effects in addition to the same effects as the effects (1) to (4) of the first embodiment.

(5) The upstream ends of the flow paths FP are located at the first end portion of the heat exchange plate 30X in the longitudinal direction, and the downstream ends of the flow paths FP are located at the second end portion of the heat exchange plate 30X in the longitudinal direction. Therefore, in the heat exchange plate 30X, the heat medium flows from the first end portion toward the second end portion of the heat exchange plate 30X. That is, the configuration of the heat exchanger 20X is simplified in that the configuration of the flow paths FP through which the heat medium flows is simplified. In other words, the configuration of the heat exchanger 20X is simplified in that the heat exchange plate 30X does not require the cap 70.

### Modification

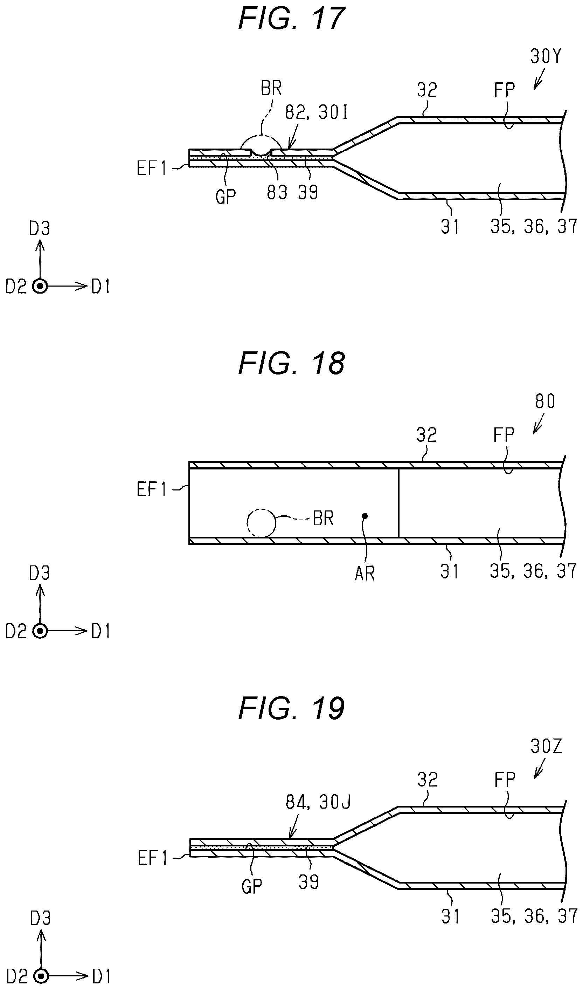

The embodiment can be modified as follows. The embodiment and the following modifications can be combined with one another without technical contradiction.
- The shape of the closing portion 30C of the heat exchange plate 30 can be appropriately changed. For example, as illustrated in Fig. 17, the upper wall 31 constituting a closing portion 30I of a heat exchange plate 30Y according to a first modification has a plurality of supply holes 83 penetrating the upper wall 31 in the plate thickness direction. The plurality of supply holes 83 are provided as many as the flow paths FP. The plurality of supply holes 83 are respectively connected to the plurality of gaps GP filled with the brazing portions 39.

When the heat exchange plate 30Y according to the first modification is manufactured, a compressed portion 82 is molded in the second pressing step S40. In the second pressing step S40, the plurality of supply holes 83 respectively connected to the plurality of gaps GP are molded. Subsequently, in the applying step S51, the brazing material BR is applied to cover the plurality of supply holes 83 as indicated by a two-dot chain line in Fig. 17. Thereafter, in the heating step S52, the liquefied brazing material BR penetrates the plurality of gaps GP through the plurality of supply holes 83. As a result, the gaps GP between the upper wall 31, the lower wall 32, the two side walls 33 and 34, and the plurality of partition walls 35 to 37, which constitute the closing portion 30I, can be filled with the brazing portions 39. Thus, the compressed portion 82 serves as the closing portion 30I, and thus the heat exchange plate 30Y according to the first modification is manufactured.
- As illustrated in Fig. 18, a method for manufacturing a heat exchange plate 30Z according to a second modification includes a removal step and an arrangement step instead of the applying step S51. The removal step and the arrangement step are steps before the second pressing step S40. As illustrated in Fig. 18, the removal step is a step of removing the plurality of partition walls 35 to 37 constituting the first end portion of the extruded material 80. When the removal step is performed, a space AR in which the brazing material BR can be disposed is formed at the first end portion of the extruded material 80. The arrangement step is a step of disposing the rod-shaped brazing material BR in the space AR.

When the second pressing step S40 is performed after the arrangement step, the upper wall 31 and the lower wall 32 constituting the first end portion of the extruded material 80 are compressed in the plate thickness direction, so that the brazing material BR is compressed between the upper wall 31 and the lower wall 32. A compressed portion 84 is molded. Therefore, when the heating step S52 is performed after the second pressing step S40, the space AR between the upper wall 31 and the lower wall 32 is filled with the brazing portion 39 as illustrated in Fig. 19. Thus, the compressed portion 84 serves as a closing portion 30J, and thus the heat exchange plate 30Z according to the second modification is manufactured.
- The heat exchange portion 30B of the heat exchange plate 30 preferably has a shape corresponding to the heat exchange target 100. For example, the heat exchange portion 30B of the heat exchange plate 30 may have a flat plate shape.
- The heat exchanger 20 may be mounted on a mounting object such as a vehicle, such that the plate thickness direction of the heat exchange plate 30 is the vertical direction. In this case, the heat exchange target 100 is preferably placed on the heat exchange portion 30B of the heat exchange plate 30. That is, the heat exchanger 20 cools or heats the heat exchange target 100 through a bottom surface of the heat exchange target 100.
- In the first embodiment, the first end portion of the heat exchange plate 30 may have a stepped shape with respect to the longitudinal direction and the plate thickness direction. Thus, in the first end portion of the heat exchange plate 30, the end surface of the upper wall 31 and the end surface of the lower wall 32 may be shifted in the longitudinal direction of the heat exchange plate 30.
- In the first embodiment, at the first end portion of the heat exchange plate 30, a position of the upper wall 31 and a position of the lower wall 32 may coincide with each other in the longitudinal direction. That is, the first end surface EF1 of the heat exchange plate 30 may be orthogonal to the longitudinal direction of the heat exchange plate 30. The same applies to the second embodiment.
- In the first embodiment, the heat exchanger 20 can be used alone. In this case, one of the two first openings 43 is preferably closed, and one of the two second openings **44** is preferably closed. The same applies to the second embodiment.
- In the first embodiment, the material of the components of the heat exchanger 20 excluding the heat exchange plate 30 may be a non-metal material such as resin. The same applies to the second embodiment.
- The heat exchange plate 30 according to the first embodiment may be configured such that the first flow paths FP1 and the second flow paths FP2 are arranged in the plate thickness direction of the heat exchange plate 30.
- A battery as the heat exchange target 100 may be a square type or a pouch type.

### Summary of Embodiments

A heat exchange plate having a plurality of flow paths through which a heat medium flows and having an elongated rectangular plate shape includes: an upper wall and a lower wall that cover the plurality of flow paths from both sides of the heat exchange plate in a plate thickness direction; and a plurality of partition walls that connect the upper wall and the lower wall in the plate thickness direction and that partition the plurality of flow paths. A direction in which the heat medium flows through the plurality of flow paths is a longitudinal direction of the heat exchange plate. At least one end portion of the heat exchange plate in the longitudinal direction is a closing portion that closes the plurality of flow paths. The upper wall, the lower wall, and the plurality of partition walls that constitute the closing portion are compressed in the plate thickness direction. The heat exchange plate further includes: a brazing portion that fills a gap present between the upper wall, the lower wall, and the plurality of partition walls that constitute the closing portion.

The closing portion of the heat exchange plate is compressed in the plate thickness direction. Further, in the closing portion of the heat exchange plate, the gap between the upper wall, the lower wall, and the plurality of partition walls is filled with the brazing portion. Thus, the closing portion of the heat exchange plate closes at least one end portion of the plurality of flow paths. That is, at the end portion of the heat exchange plate, it is possible to close the end portions of the plurality of flow paths without removing the partition walls or making an interval between the upper wall and the lower wall constant. In this respect, the heat exchange plate can reduce the time and effort for manufacturing.

In the longitudinal direction, one of the upper wall and the lower wall that constitute the closing portion preferably has a length longer than the other.

The heat exchange plate has a configuration in which a brazing material that is a raw material of the brazing portion is easily disposed on a wall portion having a long length in the longitudinal direction among the upper wall and the lower wall constituting the closing portion. Therefore, the brazing portion filling the gap of the closing portion is easily generated.

In the heat exchange plate, of both end surfaces of the heat exchange plate in the longitudinal direction, the end surface constituting the closing portion is preferably inclined with respect to the plate thickness direction when viewed from a direction orthogonal to both the longitudinal direction and the plate thickness direction.

By forming the end surface constituting the closing portion of the heat exchange plate as the inclined surface as described above, the length of one of the upper wall and the lower wall constituting the closing portion can be longer than the length of the other. That is, a configuration in which the length of one of the upper wall and the lower wall constituting the closing portion is longer than the length of the other can be implemented by a simple configuration.

In the heat exchange plate, it is preferable that the plurality of partition walls constituting the closing portion are compressed in the plate thickness direction so as to bend, and bending directions of the plurality of partition walls are the same.

In the above-described heat exchange plate, shapes of the gaps present between the upper wall, the lower wall, and the plurality of partition walls, which constitute the closing portion, are likely to be uniform. Therefore, unevenness is less likely to occur in brazing when the brazing portion is generated.

A method for manufacturing the heat exchange plate includes: an extrusion step of molding an extruded material having the upper wall, the lower wall, and the plurality of partition walls by extrusion processing; a pressing step of compressing, in the plate thickness direction, at least one end portion of the extruded material in an extrusion direction to mold a compressed portion at the at least one end portion; and a penetration step of causing a brazing material to penetrate from an end surface of an end portion provided with the compressed portion, among both end surfaces of the extruded material in the extrusion direction, into a gap present between the upper wall, the lower wall, and the plurality of partition walls that constitute the compressed portion to make the compressed portion into the closing portion.

The method for manufacturing the heat exchange plate can obtain the same effects as those of the heat exchange plate described above.

In the heat exchange plate, an end surface of the upper wall constituting the closing portion is preferably shifted in the longitudinal direction with respect to an end surface of the lower wall constituting the closing portion.

Since the end surface of the upper wall constituting the closing portion is shifted in the longitudinal direction of the heat exchange plate with respect to the end surface of the lower wall, it is easy to apply the paste-like brazing material to the end portion where the closing portion is located. Therefore, when a manufacturing process of applying the paste-like brazing material to the end portion where the closing portion is located and then heating the paste-like brazing material is adopted, the heat exchange plate can be easily manufactured.

## Claims

1. A heat exchange plate (30) having a plurality of flow paths through which a heat medium flows and having an elongated rectangular plate shape, the heat exchange plate comprising:
an upper wall (31) and a lower wall (32) that cover the plurality of flow paths from both sides of the heat exchange plate in a plate thickness direction; and
a plurality of partition walls (35 to 37) that connect the upper wall and the lower wall in the plate thickness direction and that partition the plurality of flow paths, wherein
a direction in which the heat medium flows through the plurality of flow paths is a longitudinal direction of the heat exchange plate,
at least one end portion of the heat exchange plate in the longitudinal direction is a closing portion that closes the plurality of flow paths,
the upper wall, the lower wall, and the plurality of partition walls that constitute the closing portion are compressed in the plate thickness direction, and
the heat exchange plate further comprises:
a brazing portion (39) that fills a gap present between the upper wall, the lower wall, and the plurality of partition walls that constitute the closing portion.

2. The heat exchange plate according to claim 1, wherein
in the longitudinal direction, one of the upper wall and the lower wall that constitute the closing portion has a length longer than the other.

3. The heat exchange plate according to claim 2, wherein
of both end surfaces of the heat exchange plate in the longitudinal direction, the end surface constituting the closing portion is inclined with respect to the plate thickness direction when viewed from a direction orthogonal to both the longitudinal direction and the plate thickness direction.

4. The heat exchange plate according to any one of claims 1 to 3, wherein
the plurality of partition walls constituting the closing portion are compressed in the plate thickness direction so as to bend, and
bending directions of the plurality of partition walls are the same.

5. A method for manufacturing the heat exchange plate according to claim 1, the method comprising:
an extrusion step of molding an extruded material having the upper wall, the lower wall, and the plurality of partition walls by extrusion processing;
a pressing step of compressing, in the plate thickness direction, at least one end portion of the extruded material in an extrusion direction to mold a compressed portion at the at least one end portion; and
a penetration step of causing a brazing material to penetrate, from an end surface of an end portion provided with the compressed portion among both end surfaces of the extruded material in the extrusion direction, into a gap present between the upper wall, the lower wall, and the plurality of partition walls that constitute the compressed portion, to make the compressed portion into the closing portion.
